# EUROPEAN PATENT APPLICATION

(11) **EP 2 482 229 A2**
(43) Date of publication of application: **01.08.2012**
(21) Application number: 12153188.3
(22) Date of filing: 30.01.2012
(51) Int. Cl.: G06K 7/10

(54) **Code symbol reading system supporting operator-dependent system configuration parameters**

(30) Priority: 31.01.2011 US 201113017289
(71) Applicant: Metrologic Instruments, Inc., Blackwood, NJ 08012 (US)
(72) Inventor: Samek, Justin, Morristown, NJ 07962-2245 (US)
(74) Representative: Buckley, Guy Julian

(57) **Abstract**

A method of and system for setting and switching user preferences between system operators, to provide a higher return on investment (ROI) and a more satisfying work environment. The system allows operators to easily select and implement particular customizable system configuration parameters (SCPs) in a code symbol reading system, based on personal preferences of the system operator, which can lead to more effective scanning performance. A different set of customizable SCPs are programmably stored in system memory (e.g. EPROM) for each system operator/user registered to use the system, to improve the quality of the working environment and increase worker productivity.

## Description

### BACKGROUND OF INVENTION

### Field Of Invention

The present invention relates to improvements in bar code symbol scanning and reading systems that provide improved levels of convenience and system performance.

### Brief Description Of The State Of The Art

The use of bar code symbol reading systems in retail environments is well known in the art. In any given retail environment, there is typically at different bar code symbol reading system deployed at each POS station for performing checkout operations, and in different mobile applications (e.g. inventory, price checking, stock keeping etc).

Typically, each such bar code symbol reading system is arranged by a corporate IT team, in a generalized "best configuration" that has been adapted for the standard employee working in the retail environment. This best configuration sets the system parameters for features and functionalities such as targeting on/off, beeper volume, beep pitch, vibration feedback, same symbol time out, motion tolerance, scan plane preference during scan operation, etc.

When desiring to change any of these system parameters from their "best" default settings, a configuration utility such as MetroSet2™ is often used to change particular configuration parameters in a particular bar code reading system. Changing system parameters using such utilities involves time and energy. Also, some employees on different work shifts will not prefer the system parameters selected by co-employees, thus creating controversy in the work environment where employees are permitted to change system parameters away from the "best configuration" settings.

Thus, there is a great need in the art for a new and improved way of allowing employees to change the system parameters of bar code symbol reading systems in retail work environment, while overcoming the shortcomings and drawbacks of prior art systems and methodologies.

### OBJECTS AND SUMMARY OF THE PRESENT INVENTION

Accordingly, a primary object of the present disclosure is to provide a novel method of and apparatus for allowing operators to easily set up, modify, load and switch personal preferences on a bar code symbol reading system deployed in a work environment, while avoiding the shortcomings and drawbacks of prior art system and methodologies.

Another object is to provide a new and improved method of and system for setting and switching user preferences between operators, to provide a higher return on investment (ROI) and a more satisfying work environment.

Another object is to provide a new and improved method of and system for setting the system parameters of bar code reading system based on an operator's (i.e. cashier's) preferences while working at the retail POS station.

Another object is to provide such a system which allows operators to easily select and implement particular system configuration parameters in a bar code symbol reading system, based on personal preferences of the system operator, which can lead to more effective scanning performance.

Another object to provide a code symbol reading system with the capacity to programmably store in its system memory (e.g. EPROM), a different set of system configuration parameters (SCPs) for each system operator/user registered to use the system.

Another object is to provide a code symbol reading system having a different set of system configuration parameters (e.g. supporting particular types of symbologies, prefixes, suffixes, data parsing) would be programmed in a different section of memory associated with a different system user.

Another object is to provide such code symbol reading system which is capable of storing multiple user customizable configurations.

Another object is to provide such code symbol reading system, wherein its multiple user customizable configurations can be programmed using a software configuration utility that allows operators to easily determine and program settings which are end-user customizable and settings which are not allowed for a particular installation.

Another object is to provide such a method and system, wherein the system parameters may include targeting, beeper volume, beep pitch, vibration feedback, same symbol time out, motion tolerance, which scan plane to prefer during scan operation, etc.

Another object is to provide such a method and system, wherein a corporate IT team can deploy the system in a base configuration and select which settings an end user operator can customize.

Another object is to provide a method of programming a set of system configuration parameters (SCPs) in a code symbol reading system, based on the preference of the user operator, by selecting a widget from a POS-based display screen.

Another object is to provide a code symbol reading system which allows a user to easily select particular system configuration parameters (SCPs) based on personal preferences to improve the quality of the working environment and increase worker productivity.

Another object is to provide code symbol system offering significant advantages including, for example, a reduction in the cost of ownership and maintenance, with a significant improvement in convenience and deployment flexibility within an organizational environment employing diverse host computing system environments.

These and other objects of the present invention will become more apparently understood hereinafter and in the Claims appended hereto.

### BRIEF DESCRIPTION OF THE DRAWINGS OF PRESENT INVENTION

In order to more fully understand the Objects, the following Detailed Description of the Illustrative Embodiments should be read in conjunction with the accompanying Drawings, wherein:
Fig. 1 is a perspective view of an illustrative embodiment of the digital-imaging based bar code symbol reading system, supporting both manually-triggered and automatically-triggered modes of hand-supported and countertop-supported bar code symbol reading operation, and operator-dependent system configuration programming in accordance with the present disclosure;
Fig. 2A is a first perspective exploded view of the digital-imaging based bar code symbol reading system of the illustrative embodiment depicted in Fig. 1, showing its printed circuit board assembly arranged between the front and rear portions of the system housing, with the hinged base being pivotally connected to the rear portion of the system housing by way of an axle structure;
Fig. 2B is a second perspective/exploded view of the digital-imaging based bar code symbol reading system of the illustrative embodiment shown in Fig. 1;
Fig. 3 is a schematic block diagram describing the major system components of the digital-imaging based bar code symbol reading system illustrated in Figs. 1 through 2B;
Fig. 4 is a schematic representation of system configuration parameter (SCP) preferences of a plurality of cashiers programmed into the system memory of the digital-imaging based bar code symbol reading system of the illustrative embodiment;
Fig. 5 is a flow chart describing the primary steps carried out when practicing the method of programming system configuration parameter (SCP) preferences in a code symbol reading system;
Fig. 6 is a perspective view of a POS station, in which a laser-scanning bar code symbol reading system of the illustrative embodiment has been installed, and supporting operator-dependent system configuration programming in accordance with the present disclosure;
Fig. 7 is a perspective view of the laser-scanning bar code symbol reading system of Fig. 6, removed from its POS station;
Fig. 8 is a perspective Fig. 3 is a schematic block diagram describing the major system components of the laser-scanning bar code symbol reading system illustrated in Figs. 6 and 7;
Fig. 9 is a schematic representation of system configuration parameter (SCP) preferences of a plurality of cashiers programmed into the system memory of the laser scanning bar code symbol reading system of the illustrative embodiment; and
Fig. 10 is a flow chart describing the primary steps carried out when practicing the method of programming system configuration parameter (SCP) preferences in the laser-scanning bar code symbol reading system.

### DETAILED DESCRIPTION OF THE ILLUSTRATIVE EMBODIMENTS

Referring to the figures in the accompanying Drawings, the illustrative embodiments of the digital imaging-based bar code symbol reading system and will be described in great detail, wherein like elements will be indicated using like reference numerals.

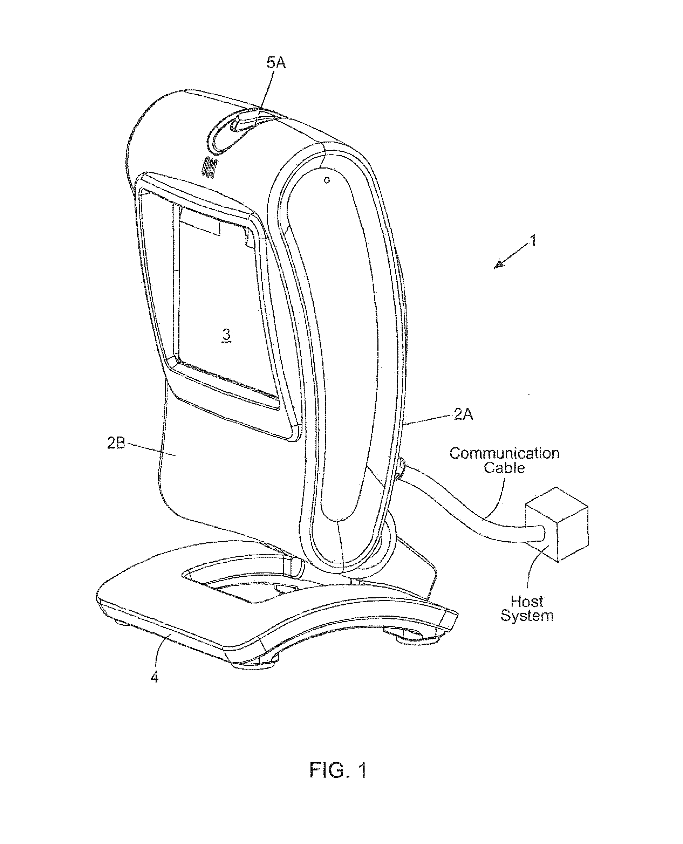

Referring now to Figs. 1 through 3, an illustrative embodiment of the hand-supportable digital-imaging bar code symbol reading system 1 will be described in detail.

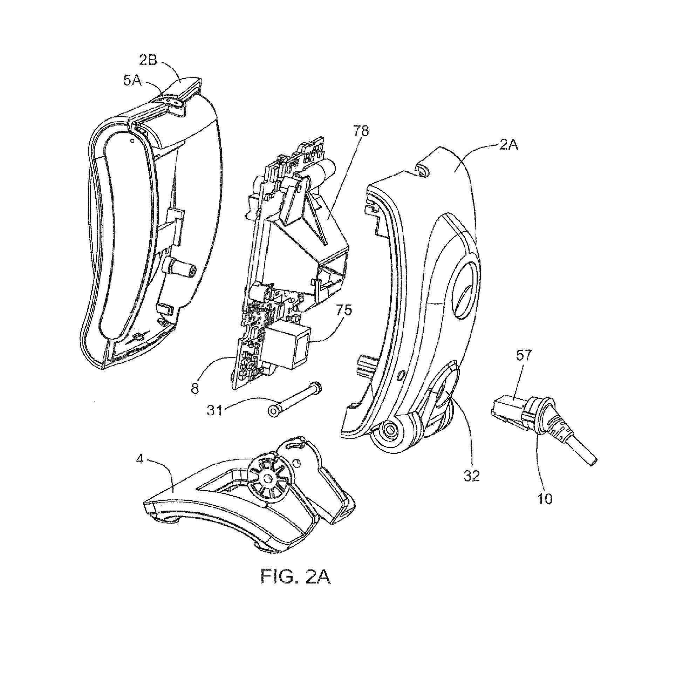

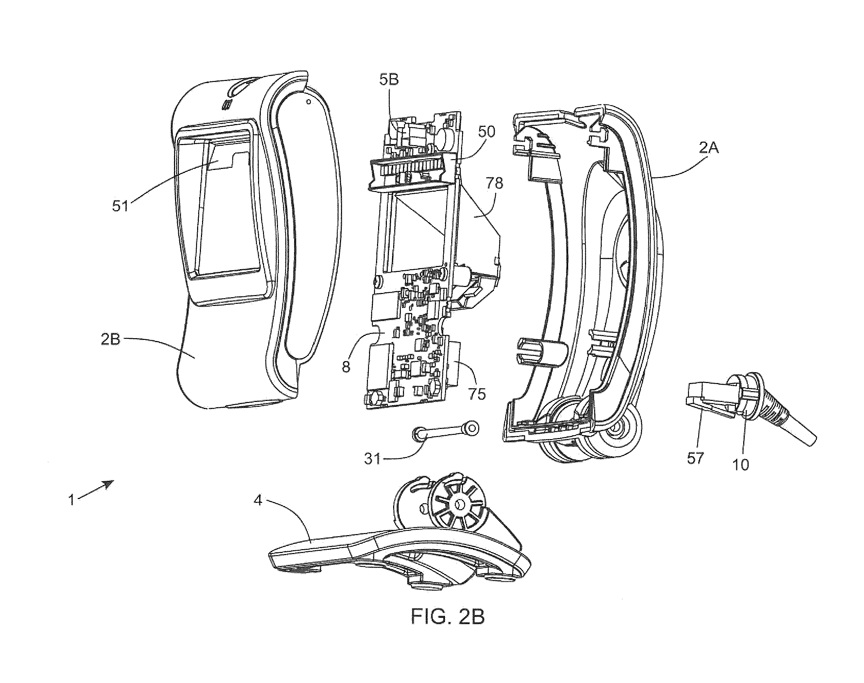

As shown in Figs. 1, 2 and 2B, the digital-imaging bar code symbol reading system 1 comprises: a hand-supportable housing 2 having (i) a front housing portion 2B with a window aperture 6 and an imaging window panel 3 installed therein; and (ii) a rear housing portion 2A. As shown, a single PC board based optical bench 8 (having optical subassemblies mounted thereon) is supported between the front and rear housing portions 2A and 3B which, when brought together, form an assembled unit. A base portion 4 is connected to the assembled unit by way of a pivot axle structure 31 that passes through the bottom portion of the imager housing and the base portion so that the hand-supportable housing and base portion are able to rotate relative to each other. The plug portion 57 of the host/imager interface cable 10 passes through a port 32 formed in the rear of the rear housing portion, and interfaces with connector 75 mounted on the PC board 8.

The hand-supportable digital-imaging based system 1 can be used in both hand-supportable and counter-top supportable modes of operation.

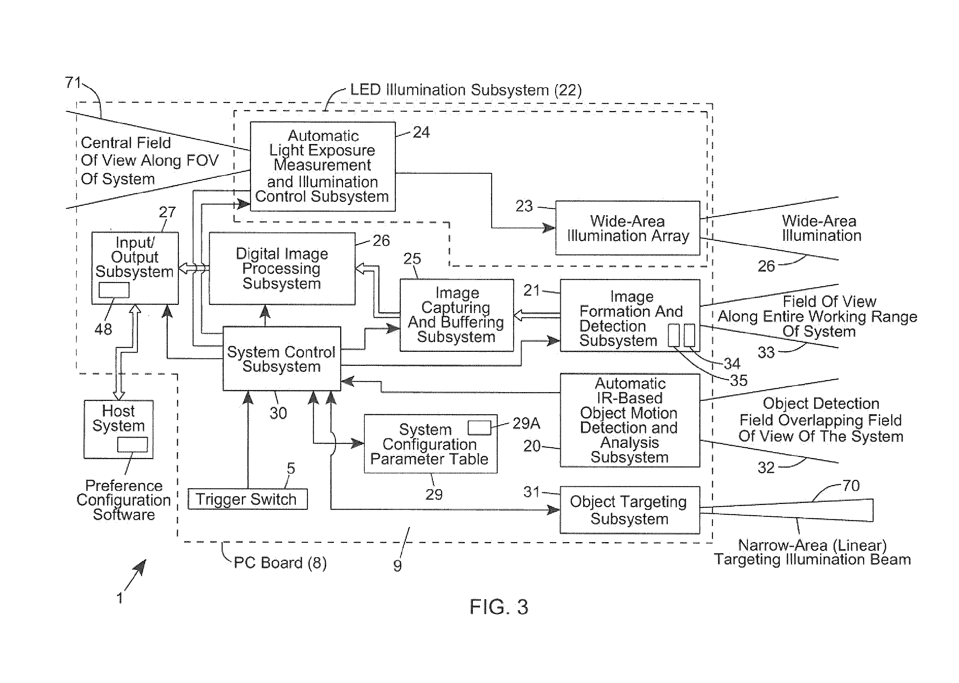

As shown in Fig. 3, the digital-imaging based code symbol reading system 1 comprises a number of subsystem components, namely: an image formation and detection (i.e. camera) subsystem 21 having image formation (camera) optics 34 for producing a field of view (FOV) upon an object to be imaged and a CMOS or like area-type image detection array 35 for detecting imaged light reflected off the object during illumination operations in an image capture mode in which at least a plurality of rows of pixels on the image detection array are enabled; a LED-based illumination subsystem 22 employing an LED illumination array 32 for producing a field of narrow-band wide-area illumination 26 within the entire FOV 33 of the image formation and detection subsystem 21, which is reflected from the illuminated object and transmitted through a narrow-band transmission-type optical filter 40 realized within the hand-supportable and detected by the image detection array 35, while all other components of ambient light are substantially rejected; an object targeting illumination subsystem 31 for generating a narrow-area targeting illumination beam 70 into the FOV to help allow the user align bar code symbols within the active portion of the FOV where imaging occurs; an IR-based object motion detection and analysis subsystem 20 for producing an IR-based object detection field 32 within the FOV of the image formation and detection subsystem 21; an automatic light exposure measurement and illumination control subsystem 24 for controlling the operation of the LED-based illumination subsystem 22; an image capturing and buffering subsystem 25 for capturing and buffering 2-D images detected by the image formation and detection subsystem 21: a digital image processing subsystem 26 for processing 2D digital images captured and buffered by the image capturing and buffering subsystem 25 and reading 1D and/or 2D bar code symbols represented therein; and an input/output subsystem 27 for outputting processed image data and the like to an external host system or other information receiving or responding device; a system configuration table 29 for storing system configuration parameters (SCPs) including operator-dependent SCPs preferred by each registered system operator, and allowed for customization by authorized information technology (IT) personnel; and a system control subsystem 30 integrated with the subsystems above, for controlling and/or coordinating these subsystems during system operation.

The primary function of the object targeting subsystem 31 is to automatically generate and project visible linear-targeting illumination beam 70 across the central extent of the FOV of the system in response to either (i) the automatic detection of an object during hand-held imaging modes of system operation, or (ii) manual detection of an object by an operator when s/he manually actuates the manually-actuatable trigger switch 5. In order to implement the object targeting subsystem 31, the OCS assembly 78 also comprises a fourth support structure for supporting the pair of beam folding mirrors above a pair of aperture slots, which in turn are disposed above a pair of visible LEDs arranged on opposite sites of the FOV optics 34 so as to generate a linear visible targeting beam 70 that is projected off the second FOV folding 75 and out the imaging window 3, as shown and described in detail in US Patent Publication No. US20080314985 A1, incorporated herein by reference in its entirety.

The primary function of the object motion detection and analysis subsystem 20 is to automatically produce an object detection field 32 within the FOV 33 of the image formation and detection subsystem 21, to detect the presence of an object within predetermined regions of the object detection field 32, as well as motion and velocity information about objects therewithin, and to generate control signals which are supplied to the system control subsystem 30 for indicating when and where an object is detected within the object detection field of the system. As shown in Fig. 2B, IR LED 90A and IR photodiode 90B are supported in the central lower portion of the optically-opaque structure 133, below the linear array of LEDs 23. The IR LED 90A and IR photodiode 90B are used to implement the object motion detection subsystem 20.

The image formation and detection subsystem 21 includes image formation (camera) optics 34 for providing a field of view (FOV) 33 upon an object to be imaged and a CMOS area-type image detection array 35 for detecting imaged light reflected off the object during illumination and image acquisition/capture operations.

The primary function of the LED-based illumination subsystem 22 is to produce a wide-area illumination field 36 from the LED array 23 when an object is automatically detected within the FOV. Notably, the field of illumination has a narrow optical-bandwidth and is spatially confined within the FOV of the image formation and detection subsystem 21 during modes of illumination and imaging, respectively. This arrangement is designed to ensure that only narrow-band illumination transmitted from the illumination subsystem 22, and reflected from the illuminated object, is ultimately transmitted through a narrow-band transmission-type optical filter subsystem 40 within the system and reaches the CMOS area-type image detection array 35 for detection and processing, whereas all other components of ambient light collected by the light collection optics are substantially rejected at the image detection array 35, thereby providing improved SNR, thus improving the performance of the system.

The narrow-band transmission-type optical filter subsystem 40 is realized by (1) a high-pass (i.e. red-wavelength reflecting) filter element embodied within at the imaging window 3, and (2) a low-pass filter element mounted either before the CMOS area-type image detection array 35 or anywhere after beyond the high-pass filter element, including being realized as a dichroic mirror film supported on at least one of the FOV folding mirrors 74 and 75, shown in Figs. 2A and 2B.

As shown in Fig. 2B, the linear array of LEDs 23 is aligned with an illumination-focusing lens structure 51 embodied or integrated within the upper edge of the imaging window 3. Also, the light transmission aperture 60 formed in the PC board 8 is spatially aligned within the imaging window 3 formed in the front housing portion 2A. The function of illumination-focusing lens structure 51 is to focus illumination from the single linear array of LEDs 23, and to uniformly illuminate objects located anywhere within the working distance of the FOV of the system.

As shown in Figs. 2B, an optically-opaque light ray containing structure 50 is mounted to the front surface of the PC board 8, about the linear array of LEDs 23. The function of the optically-opaque light ray containing structure 133 is to prevent transmission of light rays from the LEDs to any surface other than the rear input surface of the illumination-focusing lens panel 3, which uniformly illuminates the entire FOV of the system over its working range. When the front and rear housing panels 2B and 2A are joined together, with the PC board 8 disposed therebetween, the illumination-focusing lens panel 3 sits within slanted cut-aways formed in the top surface of the side panels, and illumination rays produced from the linear array of LEDs 23 are either directed through the rear surface of the illumination-focusing lens panel 3 or absorbed by the black colored interior surface of the structure 133.

As shown in Figs. 2A and 2B the optical component support (OCS) assembly 78 comprises: a first inclined panel for supporting the FOV folding mirror 74 above the FOV forming optics, and a second inclined panel for supporting the second FOV folding mirror 75 above the light transmission aperture 60. With this arrangement, the FOV employed in the image formation and detection subsystem 21, and originating from optics supported on the rear side of the PC board, is folded twice, in space, and then projected through the light transmission aperture and out of the imaging window of the system.

The automatic light exposure measurement and illumination control subsystem 24 performs two primary functions: (1) to measure, in real-time, the power density [joules/cm] of photonic energy (i.e. light) collected by the optics of the system at about its image detection array 35, and to generate auto-exposure control signals indicating the amount of exposure required for good image formation and detection; and (2) in combination with the illumination array selection control signal provided by the system control subsystem 30, to automatically drive and control the output power of the LED array 23 in the illumination subsystem 22, so that objects within the FOV of the system are optimally exposed to LED-based illumination and optimal images are formed and detected at the image detection array 35. The OCS assembly 78 also comprises a third support panel for supporting the parabolic light collection mirror segment 79 employed in the automatic exposure measurement and illumination control subsystem 24. Using this mirror 78, a narrow light collecting FOV is projected out into a central portion of the wide-area FOV 33 of the image formation and detection subsystem 21 and focuses collected light onto photo-detector 81, which is operated independently from the area-type image sensing array, schematically depicted in Fig. 3 by reference numeral 35.

The primary function of the image capturing and buffering subsystem 25 is (1) to detect the entire 2-D image focused onto the 2D image detection array 35 by the image formation optics 34 of the system, (2) to generate a frame of digital pixel data for either a selected region of interest of the captured image frame, or for the entire detected image, and then (3) buffer each frame of image data as it is captured. Notably, in the illustrative embodiment, the system has both single-shot and video modes of imaging. In the single shot mode, a single 2D image frame (31) is captured during each image capture and processing cycle, or during a particular stage of a processing cycle. In the video mode of imaging, the system continuously captures frames of digital images of objects in the FOV. These modes are specified in further detail in US Patent Application Publication No. US20080314985 A1, incorporated herein by reference in its entirety.

The primary function of the digital image processing subsystem 26 is to process digital images that have been captured and buffered by the image capturing and buffering subsystem 25, during modes of illumination and operation. Such image processing operations include image-based bar code decoding methods as described in U.S. Patent No. 7,128,266, incorporated herein by reference.

The primary function of the input/output subsystem 27 is to support universal, standard and/or proprietary data communication interfaces with external host systems and devices, and output processed image data and the like to such external host systems or devices by way of such interfaces. Examples of such interfaces, and technology for implementing the same, are given in US Patent Nos. 6,619,549 and 6,619,549, incorporated herein by reference in their entirety.

The primary function of the system control subsystem 30 is to provide some predetermined degree of control, coordination and/or management signaling services to each subsystem component integrated within the system, as shown. While this subsystem can be implemented by a programmed microprocessor, in the preferred embodiments of the present invention, this subsystem is implemented by the three-tier software architecture supported on micro-computing platform shown in Figs. 3 and 13, and described in U.S. Patent No. 7,128,266, and elsewhere hereinafter.

The primary function of the manually-activatable trigger switch 5A integrated with the housing is to enable the user, during a manually-triggered mode of operation, to generate a control activation signal (i.e. trigger event signal) upon manually depressing the same (i.e. causing a trigger event), and to provide this control activation signal to the system control subsystem 30 for use in carrying out its complex system and subsystem control operations, described in detail herein.

The primary function of the system configuration parameter (SCP) table 29 in system memory is to store (in non-volatile/persistent memory) a set of system configuration and control parameters (i.e. SCPs) for each of the available features and functionalities, and programmable modes of supported system operation, and which can be automatically read and used by the system control subsystem 30 as required during its complex operations. Notably, such SCPs can be dynamically managed as taught in great detail in co-pending US Patent No. US20080314985 A1, incorporated herein by reference.

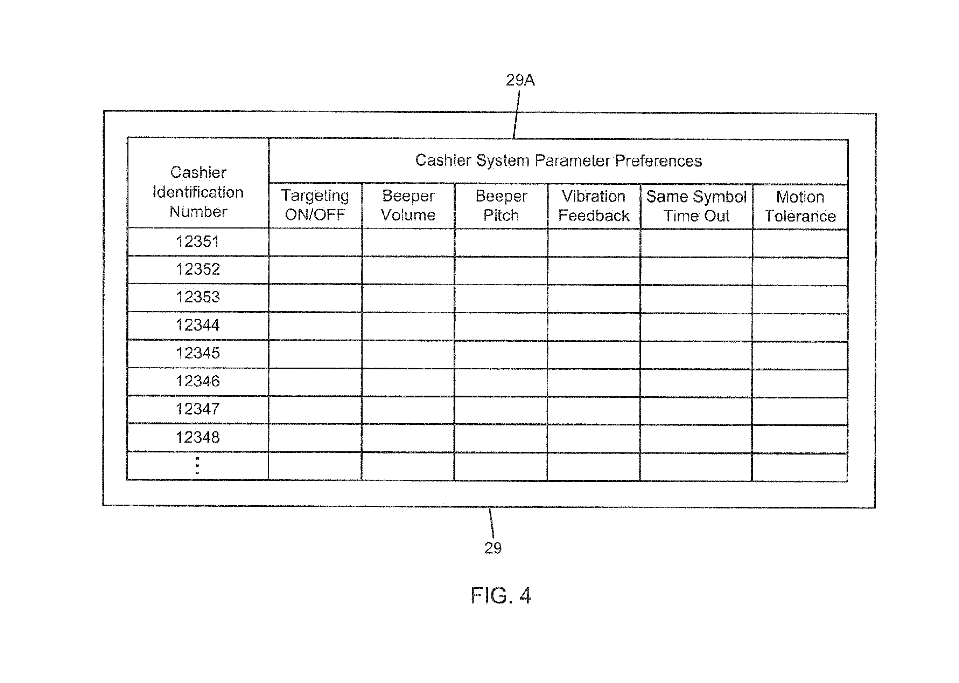

As shown in Fig. 4, another important function of the SCP table 29 is to store in system memory, a set of operator-dependent SCP preferences, for a plurality of cashiers registered to operate the digital-imaging bar code symbol reading system of the illustrative embodiment. As shown, the illustrative SCP table 29A includes a row entitled "Cashier Identification No.", and a number of rows capturing Cashier System Configuration Parameter (SCP) Preferences including, but not limited to:
Targeting ON/OFF
Beeper Volume
Beeper Pitch
Vibration Feedback
Same Symbol TimeOut
Motion Tolerance
Scan Plane Preference

To facilitate administration of operator configurable SCPs, it may be helpful to organize the user configurable (i.e. customizable) SCPs according to different levels or classes of configurable settings that can require different levels of authorization in order to modify the same. Below is an illustrative example of associated features that might fall under each class or level of SCPs, listed in descending order from most powerful to least powerful.
Level 1 = system level administrator-only settings; most often these would be administrator controlled and could adversely affect the way the scanner operates. (e.g. Image quality, preferred symbologies).
Level 2 = system level settings that could affect scan performance; a system administrator would have the capability to lock these down. (e.g. Object Detection power, timeouts, preferred scan plane).
Level 3 = User settings that could affect scan performance. (e.g. Beeper duration, pitch, volume; Indicator LEDs (e.g. color, meaning, duration); prefer cell phone mode first, etc).
Level 4 = User settings that are preferences (e.g. "Scan Mode 1 or Scan mode 2 (e.g. HF in-stand behavior, HF out of stand behavior, zero scale, object aimer).

Typically, authorized Information Technology (IT) personnel will be empowered to determine which SCPs will be customizable (i.e. operator configurable) by any given system operator on any particular digital-imaging code symbol reading system, and which SCPs will not be customizable by system operators. While such permissions will vary from embodiment to embodiment, system to system, and application environment to application environment, it is expected that the SCP preferences will be determined in such a way to support improved levels of operator convenience and performance.

A preferred way for each system operator (e.g. cashier) to set these customized SCP preferences at the POS station is for the system operator to use a GUI-based SCP configuration tool, running on the host system, while it is interfaced with the I/O subsystem 27 by way of interface driver 48, as illustrated in Fig. 3

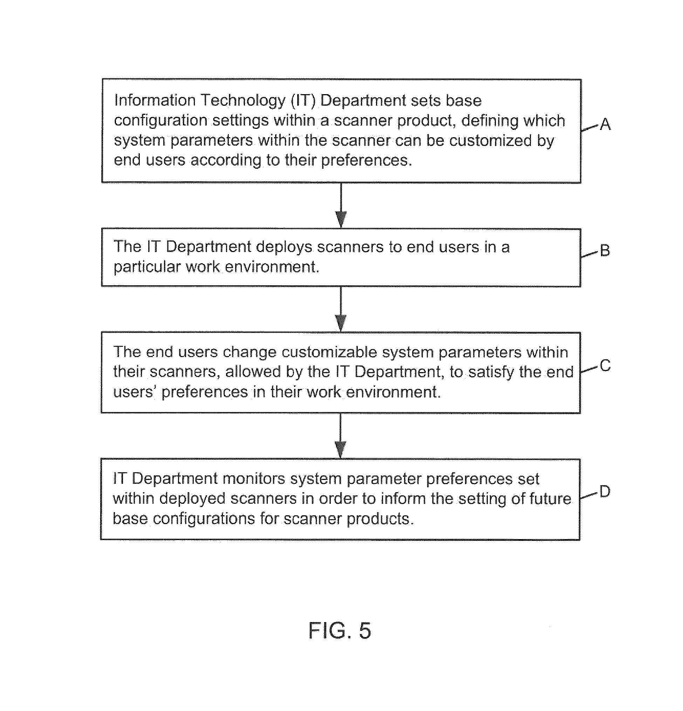

As shown at Block A in Fig. 5, the IT Department sets base configuration settings within a scanner product, defining which system parameters within the scanner can be customized by end users according to their preferences. This can be achieved using SCP preference configuration software running on the host system interfaced with the I/O subsystem 27

As shown at Block B in Fig. 5, the IT Department deploys scanners (i.e. code symbol reading systems) to end users in a particular work environment, wherein each scanner has a set of customizable SCP preferences determined by the IT personnel.

As shown at Block C in Fig. 5, the end users change customizable system configuration parameters (SCPs) within their scanners, allowed by the IT Department, to satisfy the end users' preferences in their work environment.

As shown at Block D in Fig. 5, the IT Department monitors system configuration parameter preferences set within deployed scanners in order to inform the setting of future base configurations for scanner products.

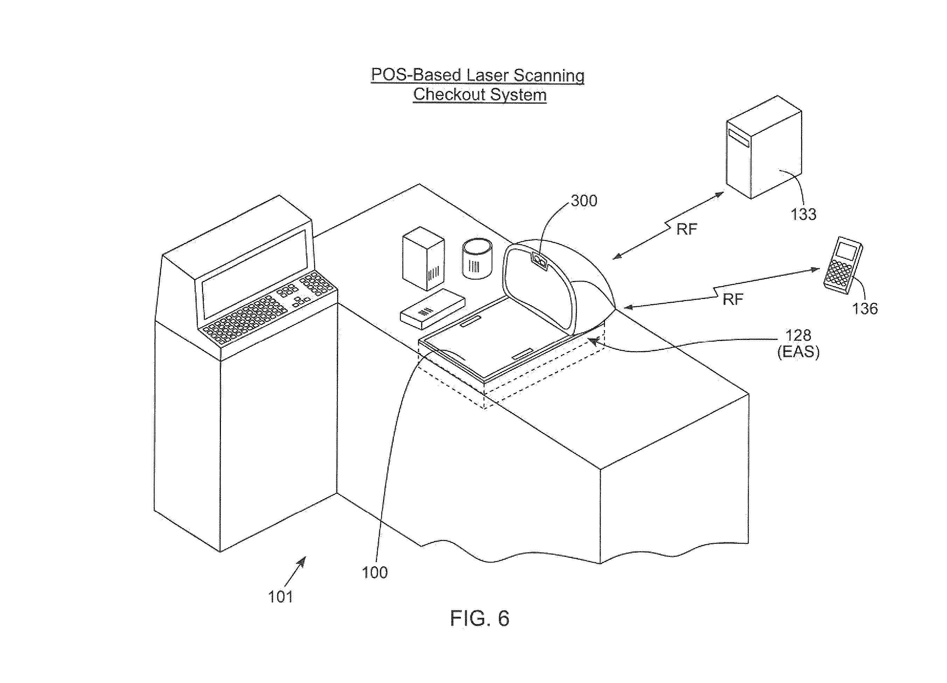

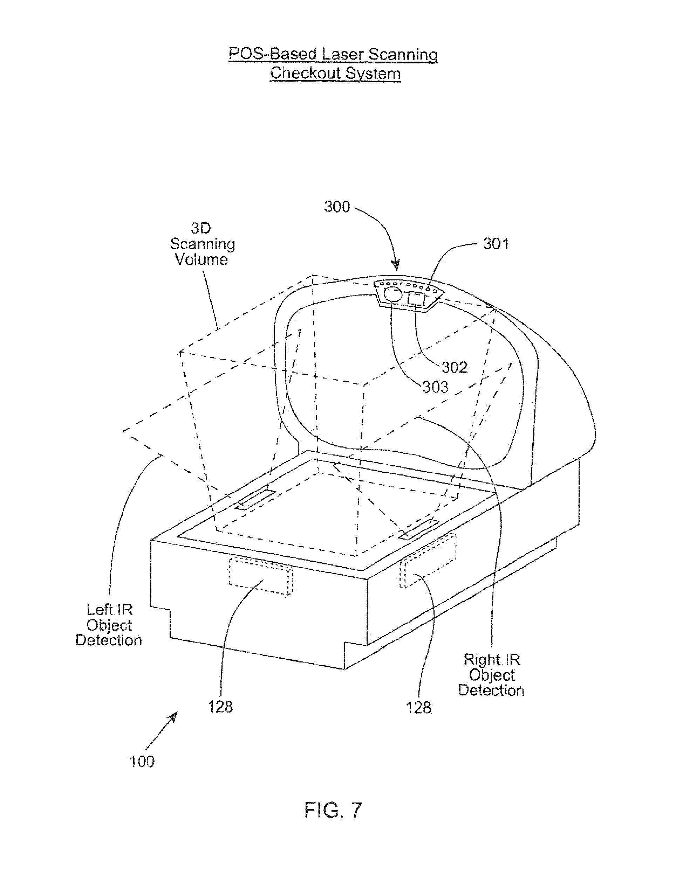

In Fig. 6, a second illustrative embodiment of the operator-dependent code symbol reading system is shown realized in the form of a POS checkout system 101 which employs a bi-optic laser scanning bar code symbol reading subsystem 100. In Fig. 7, the system 100 is shown removed from its POS environment, and includes a pair of IR object detection fields 120A and 120B which are projected outside of the limits of the horizontal and vertical scanning windows of the system, and spatially co-incident therewith, for sensing in real-time the motion of objects being passing therethrough during system operation. As shown in Fig. 7, the POS checkout system 101 also includes an EAS subsystem 28 for deactivating EAS tags on product items after the products have been checkout (i.e. purchased at the POS-based checkout station.

In general, the IR-based object motion detection fields 120A and 120B can be generated in various ways, including from a plurality of IR Pulse-Doppler LIDAR motion/velocity detection subsystems 300 installed within the system housing. In the illustrative embodiments of Fig. 3A, multiple IR Pulse-Doppler LIDAR motion/velocity sensing chips (e.g. Philips PLN2020 Twin-Eye 850nm IR Laser-Based Motion/Velocity Sensor System in a Package (SIP)) can be employed in the system. Details regarding this subsystem are described in US Publication No. 2008/0283611 A1.

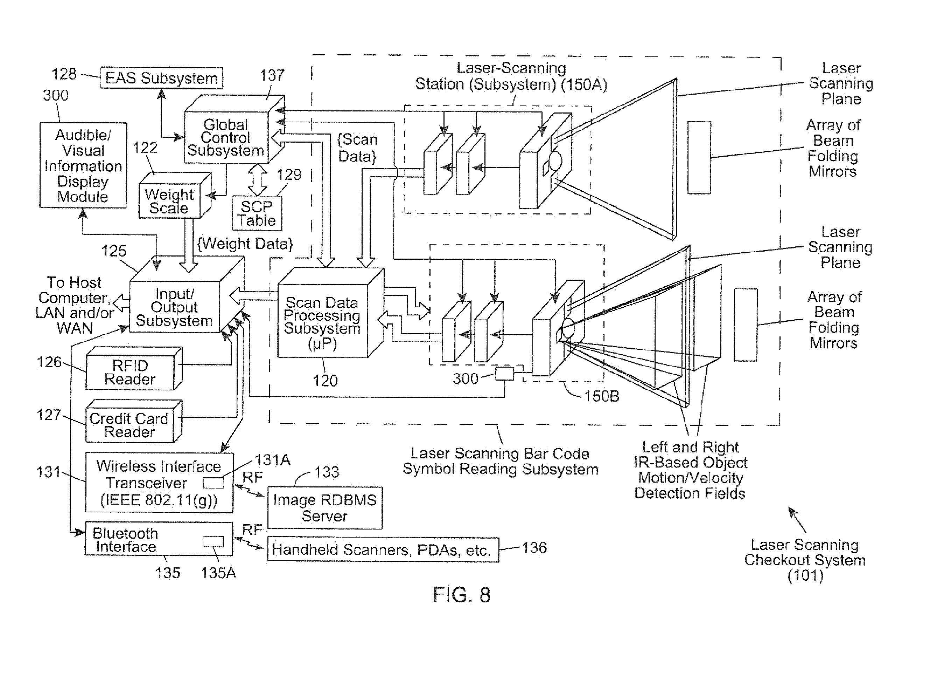

As shown in Fig. 8 the bar code symbol reading subsystem 100 comprises: a pair of laser scanning stations (i.e. subsystems) 150A and 150B, for generating and projecting a complex of laser scanning planes into the 3D scanning volume of the subsystem; a scan data processing subsystem 120 for supporting automatic processing of scan data collected from each laser scanning plane in the system; an electronic weight scale 122 employing one or more load cells positioned centrally below the system housing, for rapidly measuring the weight of objects positioned on the window aperture of the system for weighing, and generating electronic data representative of measured weight of the object; an input/output subsystem 125 for interfacing with the image processing subsystem, the electronic weight scale 122, RFID reader 126, and credit-card reader 127; an electronic article surveillance (EAS) subsystem 128 for generating an EAS tag deactivation field under the supervision of control subsystem 137; an audible/visual information display subsystem (i.e. module) 300 for visually and/or audibly displaying various types of indications to the system operator and/or customers product scanning and checkout operations; a wireless interface transceiver (IEEE 802.11(g) 131; a RDBMS server 133 interfaced with transceiver 131, for supporting POS product pricing and related services; a Bluetooth interface 135, interfaced with I/O subsystem 125, and hand-held scanners, PDAs and the like 136.

The primary function of control subsystem 137 is to orchestrate the various subsystems in the POS-based checkout system 100, and also process data inputs and determine that each bar-coded product scanned at the checkout system 100 has been successfully purchased (i.e. paid for) and controlling the deactivation of any EAS tags applied to purchased products, and the like.

The primary function of the system configuration parameter (SCP) table 129 in system memory is to store (in non-volatile/persistent memory) a set of system configuration and control parameters (i.e. SCPs) for each of the available features and functionalities, and programmable modes of supported system operation, and which can be automatically read and used by the system control subsystem 137 as required during its complex operations. Notably, such SCPs can be dynamically managed as taught in great detail in co-pending US Patent No. US20080314985 A1, incorporated herein by reference.

As shown in Fig. 8, another important function of the SCP table 129 is to store in system memory 129, a set of operator-dependent SCP preferences for a plurality of cashiers who are registered to operate the digital-imaging bar code symbol reading system 100.

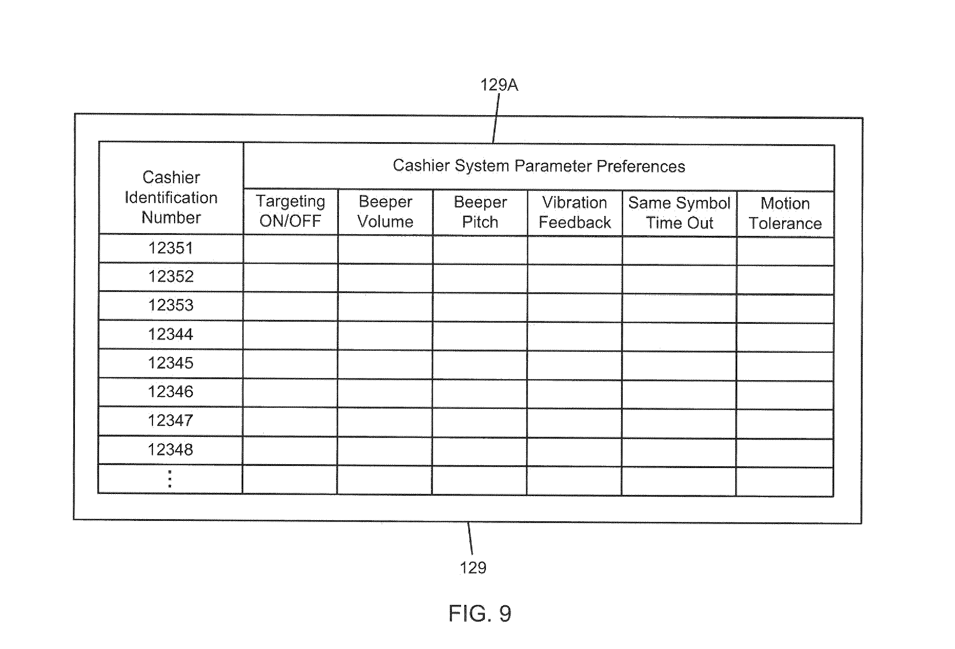

As shown in Fig. 9, the illustrative SCP table 219A includes a row entitled "Cashier Identification No.", and a number of rows capturing Cashier System Configuration Parameter (SCP) Preferences including, but not limited to:
Targeting ON/OFF
Beeper Volume
Beeper Pitch
Vibration Feedback
Same Symbol TimeOut
Motion Tolerance
Scan Plane Preference

To facilitate administration of operator configurable SCPs, it may be helpful to organize the user configurable (i.e. customizable) SCPs according to different levels or classes of configurable settings that can require different levels of authorization in order to modify the same. Below is an illustrative example of associated features that might fall under each class or level of SCPs, listed in descending order from most powerful to least powerful.
Level 1 = system level administrator-only settings; most often these would be administrator controlled and could adversely affect the way the scanner operates. (e.g. Image quality, preferred symbologies).
Level 2 = system level settings that could affect scan performance; a system administrator would have the capability to lock these down. (e.g. Object Detection power, timeouts, preferred scan plane).
Level 3 = User settings that could affect scan performance. (e.g. Beeper duration, pitch, volume; Indicator LEDs (e.g. color, meaning, duration); prefer cell phone mode first, etc).
Level 4 = User settings that are preferences (e.g. "Scan Mode 1 or Scan mode 2 (e.g. HF in-stand behavior, HF out of stand behavior, zero scale, object aimer).

Typically, authorized Information Technology (IT) personnel will be empowered to determine which SCPs will be customizable by any given system operator on any particular digital-imaging code symbol reading system, and which SCPs will not be customizable by system operators. While such permissions will vary from embodiment to embodiment, system to system, and application environment to application environment, it is expected that the SCP preferences will be determined in such a way to support improved levels of operator convenience and performance.

A preferred way for each system operator (e.g. cashier) to set these customized SCP preferences at the POS station is for the system operator to use a GUI-based SCP configuration tool, running on the host system at POS station 101, while the host system is interfaced with the I/O subsystem 125 by way of interface driver, as illustrated in Figs. 1 and 8

Fig. 5 describes the primary steps carried out when practicing the method of programming SCP preferences in a code symbol reading system.

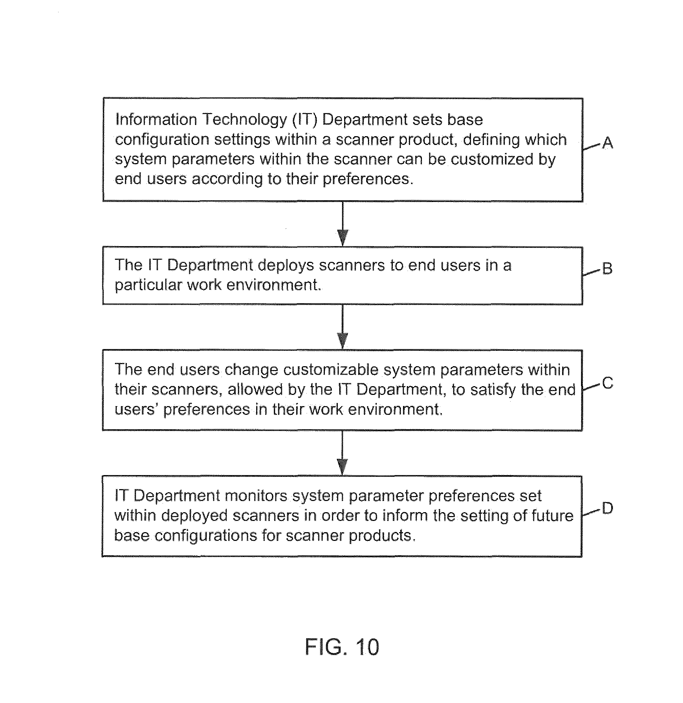

As shown at Block A in Fig. 10, the Department sets base configuration settings within a scanner product, defining which system parameters within the scanner 100 can be customized by end users according to their preferences.

As shown at Block B in Fig. 10, the IT Department deploys scanners (i.e. code symbol reading systems) 100 to end users in a particular work environment, wherein each scanner has a set of customizable SCP preferences determined by the IT personnel.

As shown at Block C in Fig. 10, the end users change customizable system configuration parameters (SCPs) within their scanners, allowed by the IT Department, to satisfy the end users' preferences in their work environment.

As shown at Block D in Fig. 10, the IT Department monitors system configuration parameter (SCP) preferences set within deployed scanners in order to inform the setting of future base configurations for scanner products

### Some Modifications Which Readily Come To Mind

While the illustrative embodiments have been described in connection with various types of bar code symbol reading applications involving 1-D and 2-D bar code structures, it is understood that the system of the present disclosure can be use to read (i.e. recognize) any machine-readable indicia, dataform, or graphically-encoded form of intelligence, including, but not limited to bar code symbol structures, alphanumeric character recognition strings, handwriting, and diverse dataforms currently known in the art or to be developed in the future. Hereinafter, the term "code symbol" shall be deemed to include all such information carrying structures and other forms of graphically-encoded intelligence.

Several modifications to the illustrative embodiments have been described above. It is understood, however, that various other modifications to the illustrative embodiment will readily occur to persons with ordinary skill in the art. All such modifications and variations are deemed to be within the scope of the accompanying Claims.

## Claims

1. A code symbol reading system for use by a plurality of registered system operators, comprising:
a system housing;
a code symbol reading subsystem, disposed in said system housing, for reading code symbols on objects, and producing symbol character data representative of said read bar code symbols;
a system configuration table stored in system memory, disposed in said system housing, for storing operator-dependent system configuration parameters (SCPs) including a set of operator-dependent SCPs preferred by each registered system operator, and allowed for customization by said registered system operators; and
a system controller, disposed in said system housing, for controlling and/or coordinating said system in accordance with said operator-dependent SCPs.

2. The code symbol reading system of Claim 1, wherein said operator-dependent SCPs are selected from the group consisting of targeting ON/OFF, beeper volume, beeper pitch, vibration feedback, same symbol timeout, motion tolerance, scan plane preference during scan operation, symbologies, prefixes, suffixes, and data parsing.

3. The code symbol reading system of Claim 1, wherein said code symbol reading subsystem comprises an image-based code symbol reading system.

4. The code symbol reading system of Claim 1, wherein said code symbol reading subsystem comprises a laser scanning based code symbol reading system.

5. The code symbol reading system of Claim 1, wherein said code symbol is a code symbol selected from the group consisting of 1D bar code symbologies, 2D bar code symbologies, and data matrix symbologies.

6. A method of programming operator-dependent system configuration parameters (SCPs) within a code symbol reading system, comprising the steps of:
(a) setting a base configuration for a set of operator-dependent system configuration parameters (SCPs) within a code symbol reading system, wherein said operator-dependent SCPs can be customized by a group of registered system operators according to their preferences;
(b) deploying said code symbol reading system in a work environment, for use by said group of system operators; and
(c) at least one said system operator changing said operator-dependent SCPs within said code symbol reading system, to satisfy the preferences of said system operator in said work environment.

7. The method of Claim 6, which further comprises:
(d) monitoring said operator-dependent SCP preferences set within said deployed code symbol reading system, in order to inform the setting of future base configurations for said code symbol code symbol systems and other code symbol reading systems.

8. The method of Claim 6, wherein said operator-dependent SCPs are selected from the group consisting of targeting ON/OFF, beeper volume, beeper pitch, vibration feedback, same symbol timeout, motion tolerance, and scan plane preference during scan operation, symbologies, prefixes, suffixes, and data parsing.

9. The method of Claim 6, wherein step (c) comprising said system operator using a software configuration utility to determine and program one or more of said operator-dependent SCPs to meet the preferences of said system operator.

10. The method of Claim 6, wherein said code symbol reading system is selected from the group consisting of an image-based code symbol reading system, and a laser scanning based code symbol reading system; and wherein said code symbol is a code symbol selected from the group consisting of 1D bar code symbologies, 2D bar code symbologies, and data matrix symbologies.
